# NOUVEAU FASCICULE DE BREVET EUROPEEN

(11) **EP 1 828 559 B2**
(45) Date de publication et mention de la décision concernant l'opposition: **25.01.2017**
(45) Mention de la délivrance du brevet: 06.01.2010
(21) Numéro de dépôt: 04816480.0
(22) Date de dépôt: 23.12.2004
(51) Int. Cl.: F01P 7/16, F01P 7/04

(54) **SYSTEME DE GESTION DE L'ENERGIE THERMIQUE D'UN MOTEUR DE VEHICULE AUTOMOBILE PAR REGULATION DES ACTIONNEURS DES FLUIDES DE CE SYSTEME**
SYSTEM ZUR STEUERUNG DER WÄRMEENERGIE EINES KRAFTFAHRZEUGMOTORS DURCH EINSTELLEN DER FLUIDANTRIEBE DES SYSTEMS
SYSTEM FOR CONTROLLING THE THERMAL ENERGY OF A MOTOR VEHICLE ENGINE BY ADJUSTING THE FLUID ACTUATORS OF SAID SYSTEM

(43) Date de publication de la demande: 05.09.2007
(73) Titulaire: VALEO THERMIQUE MOTEUR, 78321 Le Mesnil Saint-Denis Cedex (FR)
(72) Inventeur: GUERRERO, Pascal, 92500 Rueil-Malmaison (FR); JOUANNY, Philippe, 78280 Guyancourt (FR); AP, Ngy Srun, 78470 Saint Rémy les Chevreuse (FR)
(74) Mandataire: Neuviale, Bertrand
(86) Numéro de dépôt international: PCT/FR2004/003359
(87) Numéro de publication internationale: WO 2006/070079

(56) Documents cités:
- EP-A- 0 678 661
- EP-A1- 1 375 216
- DE-A1- 10 360 575
- DE-A1- 19 622 062
- DE-A1- 19 728 724
- US-A- 5 215 044
- US-A- 6 045 482
- US-B1- 6 308 664
- US-B1- 6 450 275

## Description

L'invention concerne un système de gestion de l'énergie thermique d'un véhicule à moteur.

Elle concerne plus particulièrement un système de gestion de l'énergie thermique développée par un moteur thermique de véhicule automobile, le système comprenant un circuit à haute température parcouru par un fluide caloporteur à haute température et intégrant le moteur du véhicule et un radiateur de refroidissement à haute température dans lequel le fluide caloporteur à haute température est en relation d'échange avec un fluide de refroidissement ; un circuit à basse température parcouru par un fluide caloporteur à basse température et intégrant un radiateur de refroidissement à basse température dans lequel le fluide caloporteur à basse température est en relation d'échange de chaleur avec un fluide de refroidissement ; de premiers actionneurs pour faire circuler le fluide caloporteur à haute température et le fluide caloporteur à basse température respectivement dans le circuit à haute température et dans le circuit à basse température.

Dans un système de ce type, le circuit de refroidissement à haute température sert plus particulièrement au refroidissement du moteur thermique du véhicule. Le fluide caloporteur à haute température circule à une température élevée généralement comprise entre 85°C et 100°C.

Dans le circuit à basse température, le fluide caloporteur doit se trouver à une température plus basse, par exemple de l'ordre de 40°C à 60°C. C'est le cas en particulier lorsque le circuit à basse température intègre le condenseur de climatisation. Il est en effet envisagé, dans un avenir proche, de refroidir ce condenseur par un fluide caloporteur liquide, par exemple de l'eau, et non pas de l'air comme dans les circuits de climatisation conventionnels. Il est donc nécessaire de produire le fluide caloporteur froid en optimisant au maximum la gestion de l'énergie thermique du moteur.

On a déjà proposé (US 5 353 757) des systèmes de ce type qui comprennent deux circuits, l'un à haute température et l'autre à basse température, parcourus par un même fluide caloporteur, généralement de l'eau additionnée d'un antigel tel que de l'éthylène glycol. Ce système comprend un radiateur de refroidissement unique qui peut être scindé en deux parties. Le système peut fonctionner selon trois configurations différentes. Dans une première configuration, une partie du radiateur de refroidissement est attribuée au circuit de refroidissement à haute température, tandis que l'autre partie est attribuée au circuit de refroidissement à basse température. Ou bien, la totalité du radiateur de refroidissement peut être attribuée soit au circuit à basse température, soit au circuit à haute température. Un boîtier de commande reçoit divers paramètres, notamment la température du fluide caloporteur à la sortie du moteur et commande le passage d'une configuration à l'autre en fonction de ces paramètres.

Toutefois, un système de gestion de ce type ne tient pas compte de l'ensemble des paramètres extérieurs de sorte que la gestion de l'énergie thermique n'est pas optimisée.

Il est connu du document US 5 215 044 un autre système de gestion de l'énergie thermique développé par un moteur thermique comportant une boucle à haute température et une boucle à basse température. Ledit système prévoit l'utilisation d'échangeurs de chaleur et de différents actionneurs, pilotés par une unité de commande. Toutefois, le fonctionnement de ce système n'est pas entièrement satisfaisant.

La présente invention a précisément pour objet un système de gestion de l'énergie thermique selon la revendication 1 qui remédie à ces inconvénients.

Ainsi, le système de gestion de l'invention permet de réguler non seulement la circulation des fluides caloporteurs à haute et à basse température qui circulent respectivement dans le circuit à haute température et dans le circuit à basse température, mais encore les fluides extérieurs (il peut s'agir du même fluide extérieur) qui servent à extraire les calories des deux circuits de refroidissement. La prise en compte d'au moins un paramètre relatif aux fluides de refroidissement extérieur est essentielle pour assurer de bonnes performances, en particulier du circuit de refroidissement à basse température.

Les paramètres fournis à l'unité de commande comprennent au moins un paramètre relatif aux premiers actionneurs et au moins un paramètre relatif aux seconds actionneurs.

Si la pompe de circulation du circuit à haute température est une pompe mécanique entraînée directement par le moteur, son régime de rotation ne peut pas être régulé puisqu'il dépend exclusivement de la vitesse de rotation du moteur. Par suite, dans ce cas, on se contente de réguler l'actionneur du fluide caloporteur du circuit à basse température, à savoir la pompe de circulation de ce circuit.

Les premiers et les seconds actionneurs sont pilotés par une variation de leur tension d'alimentation, en d'autres termes par une variation de la tension d'alimentation du moteur électrique qui entraîne la pompe ou le ventilateur.

Les paramètres représentatifs des besoins de refroidissement des circuits à haute et/ou à basse température peuvent comprendre au moins la température du liquide caloporteur du circuit à haute température à la sortie du moteur, la température de l'air d'admission du moteur et la température de l'air atmosphérique extérieur.

Lorsque le circuit à basse température intègre un condenseur faisant partie d'un circuit de climatisation utilisant un compresseur pour comprimer un fluide cryogénique, les paramètres représentatifs des besoins de refroidissement des circuits à haute et/ou à basse température, comprennent en outre la pression du fluide cryogénique du circuit de climatisation à la sortie du compresseur.

Les paramètres représentatifs des besoins de refroidissement des circuits à haute et/ou à basse température comprennent en outre avantageusement la température du liquide caloporteur à la sortie du radiateur à basse température et la vitesse du véhicule.

Les variables intermédiaires U1, U2, U3,... peuvent pendre une valeur nulle, une valeur minimale, ou obéir à une loi continue ou discontinue.

Dans une réalisation avantageuse, les variables intermédiaires sont engendrées par comparaison de la valeur du paramètre à des valeurs de seuils inférieur et supérieur de ce paramètre.

Une manière commode pour la mise en oeuvre de l'invention est de prévoir que les algorithmes de calcul précités sont conçus de manière à utiliser la capacité de la pompe de circulation du circuit à basse température avant celle du groupe moto-ventilateur.

Ce résultat peut être obtenu en choisissant des valeurs de seuil inférieur et supérieur plus basses pour l'algorithme de calcul de la pompe à basse température que pour l'algorithme de calcul de la tension d'alimentation du groupe moto-ventilateur.

D'autres caractéristiques et avantages de l'invention apparaîtront encore à la lecture de la description qui suit d'exemples de réalisation donnés à titre illustratif en référence aux figures annexées. Sur ces figures :
- la figure 1 est un schéma d'un système de gestion de l'énergie thermique d'un véhicule à moteur conforme à l'invention ;
- la figure 2 est un organigramme de commande du moteur de la pompe du circuit à basse température ;
- la figure 3 est un organigramme de commande du moteur électrique du groupe moto-ventilateur ; et
- la figure 4 est un exemple de courbe de régulation de la tension intermédiaire U₂ de l'organigramme de commande de la pompe du circuit à basse tension de la figure 2 ;
- la figure 5 est un exemple de courbe de régulation de la tension intermédiaire U₂ de l'organigramme de commande du groupe moto-ventilateur de la figure 3.

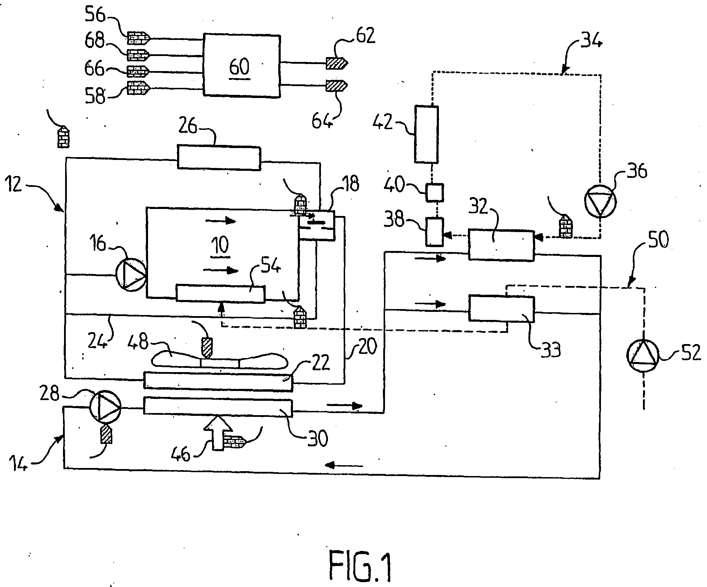

Le système de.gestion de l'énergie thermique représenté sur la figure 1 comprend un circuit à haute température désigné par la référence générale 12 et un circuit à basse température désigné par la référence générale 14. Le circuit à haute température 12 comporte un moteur 10 de véhicule automobile, une pompe de circulation 16 pour faire circuler un fluide caloporteur dans le circuit à haute température. Ce fluide caloporteur peut être le même que celui du circuit à basse température 14 ou bien les deux circuits peuvent utiliser des fluides différents.

Un thermostat ou une vanne thermostatique 18 est placé en sortie du moteur 10 pour faire circuler le fluide caloporteur, soit dans une ligne 20 comportant un échangeur de chaleur à haute température 22, soit dans une ligne de dérivation 24. L'échangeur de chaleur 22 constitue le radiateur principal du véhicule qui sert principalement au refroidissement du moteur 10. Le circuit à haute température 12 comprend en outre un radiateur de chauffage 26, encore appelé aérotherme, servant au chauffage de l'habitacle du véhicule.

Le circuit à haute température 12 peut encore comporter d'autres échangeurs de chaleur (non représenté), par exemple un radiateur d'huile, un radiateur de refroidissement des gaz d'échappement, etc.

Le circuit à basse température 14 comprend une pompe de circulation 28. Alors que la pompe 16 du circuit à haute température peut être une pompe mécanique, la pompe 28 est toujours une pompe électrique. Le circuit comprend également un échangeur de chaleur à basse température 30 et un condenseur 32 faisant partie d'un circuit de climatisation de l'habitacle du véhicule, désigné dans son ensemble par la référence générale 34.

Le circuit de climatisation est parcouru par un fluide frigorigène sous l'action d'un compresseur 36 placé en amont du condenseur 32. Le fluide frigorigène traverse successivement le condenseur 32, un réservoir 38, également appelé "bouteille", un détendeur 40, un évaporateur 42, avant de regagner le compresseur 36. Le fonctionnement du circuit de climatisation est classique. En conséquence, il ne sera pas décrit en détail.

En revanche, le condenseur 32 est particulier dans le sens où il est refroidi par le fluide caloporteur du circuit à basse température 14 au lieu d'être refroidi par un flux d'air extérieur, comme dans les circuits de climatisation classique.

Les circuits 12 et 14 peuvent être interconnectés entre eux par des moyens de commutation permettant de faire passer le fluide caloporteur d'un circuit à l'autre. Ou bien, comme dans l'exemple représenté, les circuits peuvent être indépendants l'un de l'autre. Dans ce deuxième cas, on peut prévoir d'utiliser des fluides caloporteurs différents pour chacun des circuits.

Dans l'exemple représenté, le radiateur 22 du circuit à haute température 12 et le radiateur 30 du circuit à basse température 14 sont disposés parallèlement l'un à l'autre et traversés par un même flux d'air 46. Cet aménagement avantageux permet d'utiliser, de façon classique, un groupe moto-ventilateur unique 48 pour forcer le flux d'air à travers les radiateurs 22 et 30. Toutefois cette réalisation implique qu'il n'est pas possible de commander séparément les flux d'air qui traversent chacun des deux radiateurs. C'est pourquoi, dans une variante de réalisation, les radiateurs 22 et 30 pourraient ne pas être traversés par un même flux d'air et être équipés de groupes moto-ventilateurs indépendants.

Le système de gestion de la figure 1 comprend également une ligne d'admission de l'air d'alimentation dans le moteur 10, désigné par la référence générale 50. Elle comprend un compresseur 52 qui comprime l'air ambiant, ce qui a pour effet d'élever fortement sa température. En conséquence, ce dernier doit être refroidi dans le refroidisseur d'air de suralimentation 33 mentionné précédemment et faisant partie du circuit à basse température 14. L'air refroidi est admis dans les tubulures d'admission 54 du moteur 10.

Le système de gestion de l'énergie thermique qui vient d'être décrit est équipé d'un certain nombre de capteurs qui permettent de capter des paramètres de fonctionnement représentatifs des besoins de refroidissement du circuit à basse température 14, mais également du circuit à haute température 12. Dans l'exemple représenté on trouve un capteur 56 de la température de sortie de l'eau de refroidissement à la sortie du moteur et un capteur 58 de la température du flux d'air ambiant 46 en amont du radiateur à basse température 30. Le capteur 56 fournit par conséquent une information qui renseigne sur le besoin de refroidissement du circuit à haute température 12.

En effet, plus la température de sortie de l'eau est élevée, c'est à dire plus elle se rapproche d'une valeur maximale admissible, plus le besoin de refroidissement du moteur est important. De même, le capteur 58 fournit une information qui renseigne sur le besoin de refroidissement du circuit à basse température 14 mais aussi du circuit à haute température 12. Une température de l'air extérieur basse se traduit en effet par une diminution du besoin de refroidissement et inversement, une température de l'air ambiant élevée se traduit par une augmentation du besoin de refroidissement.

Les paramètres fournis par les capteurs 56 et 58 sont introduits dans une unité de commande 60 qui régule la tension 62 de la pompe 28 du circuit à basse température 14 et la tension d'alimentation 64 du groupe moto-ventilateur 48.

La pompe 16 constitue un actionneur du fluide caloporteur du circuit à haute température 12 et la pompe de circulation 28 constitue un actionneur du fluide caloporteur du circuit à basse température 14. De même, le groupe moto-ventilateur 48 est un actionneur du fluide de refroidissement extérieur (l'air extérieur ambiant dans l'exemple décrit) des radiateurs 22 et 30. Dans l'exemple, l'actionneur 48 est commun aux deux circuits 12 et 14 mais, comme on l'a exposé, chaque circuit pourrait posséder son actionneur propre. Ainsi, conformément à l'invention, l'unité de commande 60 régule la circulation du fluide caloporteur au moins dans le circuit à basse température 14 et également la circulation de l'air de refroidissement 46 forcé par l'actionneur 48. Le système permet donc de contrôler les deux fluides qui inter-agissent dans le fonctionnement des deux circuits de refroidissement et non un seul.

En plus des deux capteurs 56 et 58, on peut prévoir un certain nombre de capteurs additionnels qui permettent d'améliorer et de préciser la connaissance des besoins de refroidissement. Dans l'exemple de la figure 1 on trouve un capteur 66 de mesure de la température de l'air d'admission à la sortie du refroidisseur d'air de suralimentation 33, ainsi qu'un capteur 68 installé sur le circuit de climatisation 34 et qui mesure la pression maximale du fluide criogénique à la sortie du compresseur 36. On pourrait compléter encore cette installation par des capteurs supplémentaires, par exemple un capteur mesurant la température de sortie de l'eau après le radiateur à basse température 30 ou un capteur de la vitesse du véhicule, par exemple.

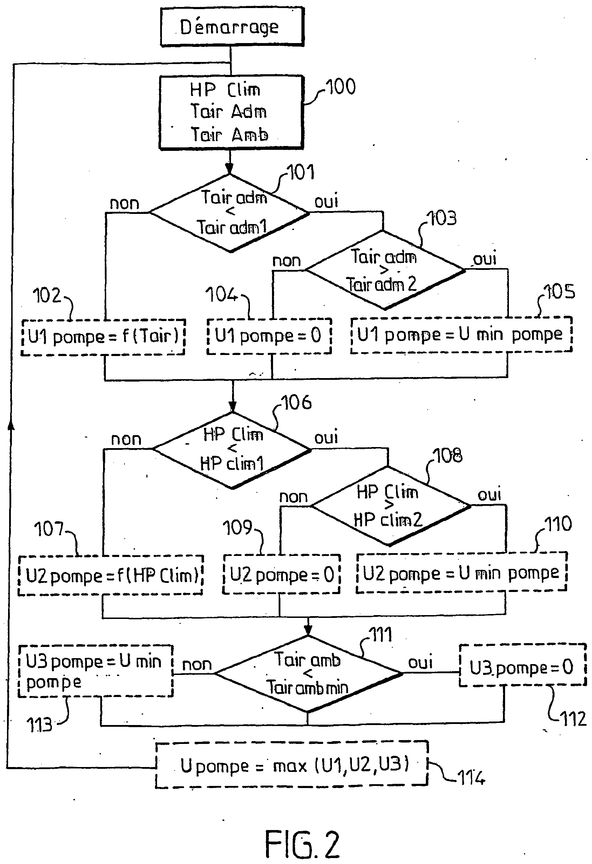

On a représenté sur la figure 2 un exemple d'un organigramme de commande du moteur électrique de la pompe du circuit à basse température. Après le démarrage du moteur, on lit les paramètres de contrôle à l'étape 100. Dans l'exemple, ces paramètres sont au nombre de trois à savoir la haute pression du circuit de climatisation HP Clim, la température de l'air d'admission T air Adm et la température de l'air ambiant T air Amb.

On effectue d'abord un test sur le refroidisseur d'air de suralimentation à eau 33 en comparant la température de l'air d'admission T Air Adm à une valeur de seuil haut T air adm 1, par exemple de 40°C. Si la température de l'air d'admission n'est pas inférieure à cette valeur de seuil haut, la variable intermédiaire U₁ pompe est égale à une fonction de la température de l'air f(T air) à l'étape 102. Si la température de l'air d'admission est inférieure à la valeur de seuil haut T air adm 1, on la compare à une étape 103 à une valeur de seuil bas T air adm 2. Cette valeur de seuil bas est par exemple de 20°C. Si la température de l'air d'admission n'est pas supérieure à la valeur de seuil bas, la variable intermédiaire U₁ pompe prend la valeur zéro à l'étape 104. Dans le cas contraire, elle prend une valeur minimale U min pompe à l'étape 105.

La valeur de la première variable intermédiaire U₁ ayant été déterminée, on effectue un test sur le condenseur à eau afin de déterminer la seconde variable intermédiaire U₂. A l'étape 106, on compare la haute pression du circuit de climatisation HP Clim, c'est à dire la valeur de la pression du fluide cryogénique à la sortie du compresseur, à une valeur de seuil haut HP Clim 1. Cette pression de seuil haut est par exemple de 8 bars.

Si la valeur de la haute pression du circuit de climatisation HP Clim n'est pas inférieure à la valeur de seuil haut HP Clim 1, la valeur de la variable intermédiaire U₂ pompe est égalée à une fonction de la haute pression, f(HP clim), du circuit de climatisation à l'étape 107. Si, au contraire, la haute pression du circuit de climatisation est inférieure à la valeur de seuil haut HP Clim 1, on la compare à une étape 108 à une valeur de seuil bas HP Clim 2, par exemple 4 bars. Si HP Clim n'est pas supérieure à la valeur de seuil bas, la variable intermédiaire U₂ pompe est égalée à zéro à l'étape 109. Dans le cas contraire, elle est égalée à une valeur minimale U min pompe à l'étape 110.

Enfin, dans une troisième étape, on effectue un test sur le groupe moto-ventilateur afin de déterminer la troisième variable intermédiaire U₃ pompe. La température de l'air ambiant, T air amb, est comparée à une valeur de seuil de l'air ambiant T air amb min, fixée par exemple à 20°C, à l'étape 111. Si la température de l'air ambiant est inférieure à cette valeur de seuil, la variable U₃ pompe prend la valeur zéro à l'étape 112. Dans le cas contraire, la variable intermédiaire U₃ pompe prend une valeur minimale U min pompe à l'étape 113.

Enfin, à l'étape 114, l'organigramme de commande détermine la valeur finale de la tension d'alimentation de la pompe électrique du circuit à basse température U pompe. Cette valeur est égalée au maximum des trois variables intermédiaires U1, U2, U3. Après cela, le cycle recommence et de nouvelles valeurs des paramètres sont lues.

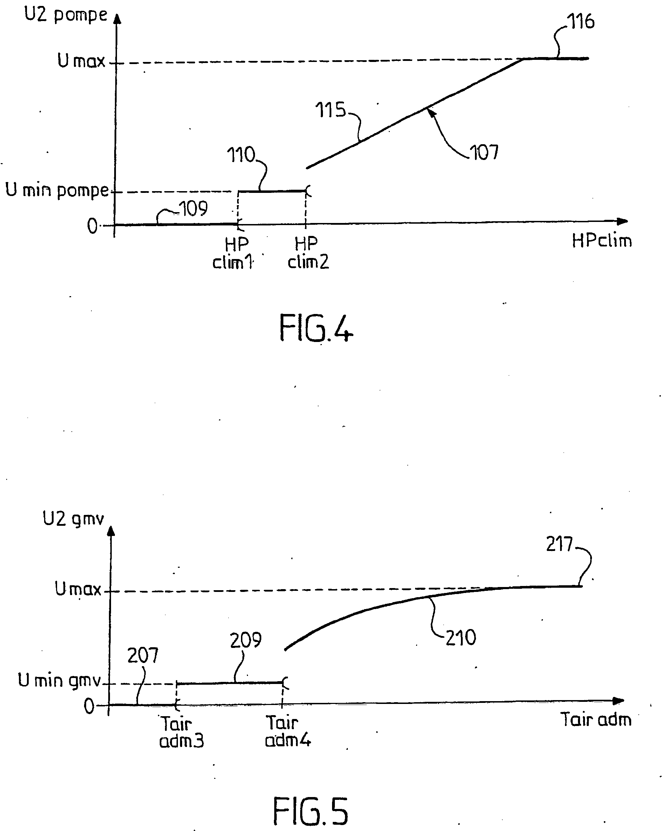

On a représenté sur la figure 4 la courbe de régulation de la variable intermédiaire U₂ pompe correspondant à l'organigramme de commande de la figure 2. On vérifie que, pour une valeur de la haute pression du circuit de climatisation inférieure à la valeur de seuil bas HP clim 1, la variable intermédiaire U2 prend la valeur zéro désignée par la référence 109 ; pour une valeur de la haute pression du circuit de climatisation HP clim comprise entre HP clim 1 et HP clim 2, la variable intermédiaire U2 prend une valeur minimale U min pompe (référence 110).

Enfin, pour une pression haute du circuit de climatisation supérieure à la valeur de seuil haut HP clim 2, la variable intermédiaire U₂ est une fonction 107 de la pression haute du circuit de climatisation. Dans l'exemple de la figure 4, cette fonction est constituée de deux segments de droite 115 et 116. La variable U2 augmente proportionnellement à la haute pression du circuit de la climatisation jusqu'à atteindre une valeur U max.

L'organigramme de commande de la pompe représenté sur la figure 2 correspond au cas où le circuit à basse température comprend à la fois un refroidisseur d'air de suralimentation et un circuit de climatisation de l'habitacle du véhicule comportant un condenseur à eau. Si l'on se trouve dans un cas où le véhicule ne comporte pas de refroidisseur d'air de suralimentation, par exemple parce que l'air d'alimentation n'est pas comprimé, on supprime dans l'organigramme de la figure 2 la partie de test relative au refroidisseur d'air de suralimentation, l'organigramme restant inchangé pour le reste. De la même manière, si le circuit de refroidissement à basse température ne comporte pas de condenseur à eau parce que le véhicule n'est pas équipé d'une climatisation ou encore parce que le circuit de climatisation utilise un condenseur classique refroidi à l'air, on supprime dans l'organigramme de commande de la figure 2 la partie de test sur le condenseur à eau, le reste de l'organigramme de commande étant inchangé.

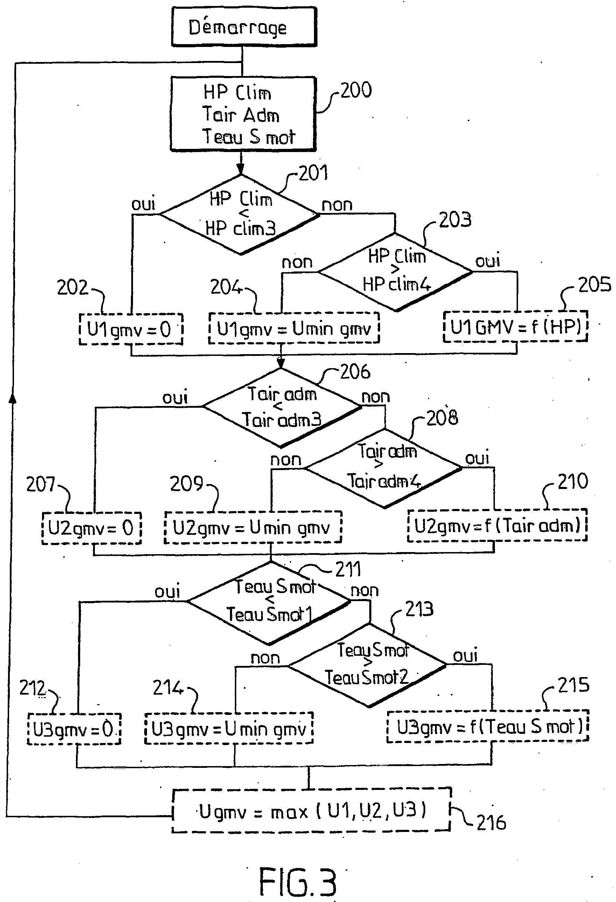

On a représenté sur la figure 3 un organigramme de commande de la tension d'alimentation du groupe moto-ventilateur. Après le démarrage du moteur du véhicule, à l'étape 200, on lit les paramètres de contrôle du GMV, à savoir la haute pression du circuit de climatisation HP clim, la température de l'air d'admission T air Adm et la température de l'eau à la sortie du moteur T eau S mot.

Dans une première étape, on effectue un test sur le condenseur à eau 32. A l'étape 201, on compare la valeur de la pression dans le circuit de climatisation à la sortie du condenseur, HP Clim, à une valeur de seuil bas HP Clim 3. La valeur de ce seuil bas est, dans l'exemple, de 12 bars. Si la valeur lue est inférieure au seuil bas, à l'étape 202, la variable intermédiaire U₁ gmv est égalée à zéro. Si elle est supérieure, on compare, à l'étape 203, la valeur de la pression haute du circuit de climatisation à une valeur de seuil haut HP Clim 4. Si la valeur n'est pas inférieure à ce seuil haut, à l'étape 204, la valeur de la tension intermédiaire U₁ gmv est égalée à une valeur de tension minimale, U min gmv. Dans le cas contraire, elle est une fonction, f(HP), de la pression haute du circuit de climatisation (étape 205).

Dans une seconde étape, on effectue un test sur le refroidisseur d'air de suralimentation 33. La valeur de la température de l'air d'admission T air adm est comparée à l'étape 206 à une valeur de seuil bas T air adm 3, par exemple 50°C. Si la température de l'air d'admission est inférieure à cette valeur de seuil bas, la variable intermédiaire U₂ gmv est égalée à zéro à l'étape 207. Dans le cas contraire, à l'étape 208, on compare la température de l'air d'admission à une valeur de seuil haut T air adm 4, par exemple 60°C. Si la température de l'air d'admission n'est pas supérieure à ce seuil haut, à l'étape 209, la variable intermédiaire U2 gmv est égalée à une valeur minimale U min gmv. Si, au contraire, la température de l'air d'admission est supérieure à la valeur de seuil haut, à l'étape 210, la variable intermédiaire U2 GMV est une fonction de la température de l'air d'admission (voir figure 5).

Enfin, dans une troisième étape, on effectue un test sur le moteur du véhicule automobile. A cet effet, à l'étape 211, la température de l'eau à la sortie du moteur, T eau S mot, est comparée à une valeur de seuil bas T eau S mot 1. Cette valeur est, par exemple, de 105°C. Si la température de l'eau est inférieure à cette valeur de seuil bas, la variable intermédiaire U3 gmv est égalée à zéro à l'étape 212. Dans le cas contraire, elle est comparée à une valeur de seuil haut T eau S mot 2, par exemple 110°C à l'étape 213. Si la température de l'eau est inférieure à la valeur de seuil haut, la variable intermédiaire U3 gmv est égalée à une valeur minimale U min gmv à l'étape 214. Si, au contraire, la température de l'eau est supérieure à la valeur de seuil haut, à l'étape 215, la variable intermédiaire U3 gmv est une fonction de la température de l'eau à la sortie du moteur.

Enfin, à l'étape 216, la tension finale de commande U gmv est égalée à la valeur maximale des trois variables intermédiaires U1, U2, U3. Après quoi, le cycle recommence et les trois paramètres sont à nouveau lus à l'étape 200.

De la même manière que pour l'organigramme de commande de la pompe du circuit à basse tension, si le véhicule ne comporte pas de refroidisseur d'air de suralimentation, la partie de l'organigramme relative à ce refroidisseur est supprimée. Si le véhicule ne comporte pas de condenseur à eau, la partie de l'organigramme relatif à ce condenseur est supprimée, le reste étant identique.

Les valeurs de seuil choisies pour l'organigramme de commande de la pompe à basse température et pour celui du groupe moto-ventilateur sont choisies de manière à utiliser la capacité de refroidissement de la pompe par priorité à celle du groupe moto-ventilateur. A cet effet, les valeurs de seuil choisies respectivement pour le test du condenseur à eau et le test du refroidisseur d'air de suralimentation sont inférieures dans l'organigramme de commande de la pompe. Ainsi, la valeur de seuil bas de la température de l'air d'admission T air adm2 est prise égale à 20°C pour la pompe, tandis qu'elle est de 60°C pour le groupe moto-ventilateur. La valeur de seuil haut de l'air d'admission T air adm 1 est prise égale à 40°C pour la pompe, alors qu'elle est de 50°C pour le groupe moto-ventilateur. De la même manière, la valeur de seuil bas de la pression haute du condenseur à eau HP Clim 2 est prise égale à 4 bars pour la commande de la pompe, alors que la valeur de seuil bas HP Clim 3 de l'organigramme de commande du groupe moto-ventilateur est égale à 12 bars. De même, la valeur de seuil haut HP Clim 1 de l'organigramme de commande de la pompe est prise égale à 8 bars, alors que la valeur de seuil haut HP Clim 4 est égale à 14 bars. Ceci se traduit par une consommation optimisée des actionneurs pompe à basse température et groupe moto-ventilateur.

On a représenté sur la figure 5 la courbe de régulation de la variable intermédiaire U₂ gmv de l'organe de commande du groupe moto-ventilateur de la figure 3. On vérifie que pour une température d'air d'admission inférieure à la valeur de seuil bas T air adm 3, la valeur de U2 gmv est nulle (référence 207); pour une valeur de la température de l'air d'admission compris entre le seuil bas et le seuil haut la variable U2 gmv est égale à une valeur minimale U min gmv (référence 209). Enfin, pour une valeur de la température de l'air d'admission supérieure à la valeur de seuil haut (référence 210), la variable U2 est une fonction de la température d'air d'admission qui augmente jusqu'à une valeur maximale U max 217 (référence 217).

## Revendications

1. Système de gestion de l'énergie thermique développée par un moteur thermique (10) de véhicule automobile, comprenant un circuit à haute température (12) parcouru par un fluide caloporteur à haute température et intégrant le moteur (10) du véhicule et un radiateur de refroidissement à haute température (22) dans lequel le fluide caloporteur à haute température est en relation d'échange de chaleur avec un fluide de refroidissement (46); un circuit à basse température (14) parcouru par un fluide caloporteur à basse température et intégrant un radiateur de refroidissement à basse température (30) dans lequel le fluide caloporteur à basse température est en relation d'échange de chaleur avec un fluide de refroidissement (46); de premiers actionneurs (16, 28) pour faire circuler le fluide caloporteur à haute température et le fluide caloporteur à basse température respectivement dans le circuit à haute température (12) et dans le circuit à basse température (14); au moins un second actionneur (48) pour faire circuler les fluides de refroidissement (46) dans les radiateurs (22, 30) à haute et à basse température; des capteurs (56, 58, 66, 68) pour capter des paramètres représentatifs des besoins de refroidissement du circuit à haute température et/ou du circuit à basse température et a fournir ces paramètres a une unité de commande (60) dudit système de gestion, ladite unité de commande (60) régulant les premiers actionneurs et les seconds actionneurs en fonction de ces paramètres, système de gestion dans lequel:
- lesdits premiers actionneurs sont des pompes de circulation (16, 28) montées sur les circuits à haute et à basse température,
- lesdits radiateurs à haute température et à basse température (22, 30) sont des radiateurs liquide/gaz, le gaz de refroidissement de ces radiateurs étant l'air atmosphérique (46) extérieur au véhicule,
- le ou lesdits actionneurs des radiateurs à haute et à basse température (22, 30) sont constitues par des groupes moto-ventilateurs (48) forçant une circulation d'air de refroidissement a travers ces radiateurs,
- l'unité de commande (60) est agencée pour utiliser la capacité de la pompe de circulation (16) du circuit à basse température avant celle du groupe moto-ventilateur (48)
- les premiers et les seconds actionneurs étant pilotés par une variation de leur tension d'alimentation,
- l'unité de commande (60) utilisant un algorithme de calcul pour chacun des actionneurs (16, 28, 48), cet algorithme créant une série de variables intermédiaires (U₁, U₂, U₃...) en fonction des paramètres fournis par les capteurs et sélectionnant la variable intermédiaire la plus élevée comme tension d'alimentation de cet actionneur.

2. Système selon la revendication 1 **caractérisé en ce que** les paramètres fournis a l'unité de commande (60) comprennent au moins un paramètre relatif aux premiers actionneurs (16, 28) et au moins un paramètre relatif aux seconds actionneurs (48).

3. Système de gestion selon la revendication 1, **caractérisé en ce que** le radiateur à haute température et le radiateur à basse température (22, 30) sont disposes l'un derrière l'autre de manière a être traverses par un même flux d'air, un actionneur unique (48) étant utilise pour les deux radiateurs.

4. Système de gestion selon l'une des revendications 1 à 3, **caractérisé en ce que** les paramètres représentatifs des besoins de refroidissement des circuits à haute température (12) et/ou à basse température (14) comprennent au moins la température (56) du fluide caloporteur du circuit à haute température a la sortie du moteur (10), la température de l'air d'admission du moteur (10), la température de l'air atmosphérique extérieur (58).

5. Système de gestion selon l'une des revendications 1 à 4, **caractérisé en ce que** le circuit à basse température (14) intègre un condenseur (32) faisant partie d'un circuit de climatisation (34) utilisant un compresseur (36) pour comprimer un fluide cryogénique, les paramètres représentatifs des besoins de refroidissement des circuits à haute température (12) et/ou à basse température (14) comprenant en outre la pression du fluide cryogénique (68) du circuit de climatisation a la sortie du compresseur (36).

6. Système de gestion selon l'une des revendications 1 à 5, **caractérisé en ce que** les paramètres représentatifs des besoins de refroidissement des circuits à haute température (12) et/ou à basse température (14) comprennent en outre la température du fluide caloporteur a la sortie du radiateur à basse température et la vitesse du véhicule.

7. Système de gestion selon l'une des revendications 1 à 6, **caractérisé en ce que** les variables intermédiaires (U1, U2, U3,...) peuvent prendre une valeur nulle, une valeur minimale, ou obéir a une loi continue ou discontinue.

8. Système de gestion selon l'une des revendications 1 à 7, **caractérisé en ce que** les variables intermédiaires (U1, U2, U3,...) sont déterminées par une comparaison de la valeur lue du paramètre avec une valeur de seuil haut et une valeur de seuil bas prédéfinies.

9. Système de gestion selon l'une des revendications 1 à 8, **caractérisé en ce que** les algorithmes de calcul sont conçus de manière a utiliser la capacité de la pompe de circulation (16) du circuit à basse température avant celle du groupe moto-ventilateur (48).

10. Système de gestion selon la revendication 9, **caractérisé en ce que** les valeurs de seuil haut et les valeurs de seuil bas de l'algorithme de commande de la pompe à basse température (28) sont choisies supérieures respectivement aux valeurs de seuil haut et aux valeurs de seuil bas de l'algorithme de commande du groupe moto-ventilateur (48) de manière à utiliser la capacité de refroidissement de la pompe avant celle du groupe moto-ventilateur (48).

11. Utilisation du système de gestion selon l'une quelconque des revendications précédentes, utilisation selon laquelle l'unité de commande (60) exploite la capacité de la pompe de circulation (16) du circuit à basse température avant celle du groupe moto-ventilateur (48).

## Patentansprüche

1. System zur Verwaltung der Wärmeenergie, die von einem Verbrennungsmotor (10) eines Kraftfahrzeugs entwickelt wird, mit einem Hochtemperaturkreis (12), der von einem Hochtemperatur-Wärmeträgerfluid durchflossen wird und den Motor des Fahrzeugs (10) und einen Hochtemperaturkühler (22) umfasst, bei dem das Hochtemperatur-Wärmeträgerfluid in einer Wärmetauscherbeziehung mit einem Kühlfluid (46) steht; mit einem Tieftemperaturkreis (14), der von einem Tieftemperatur-Wärmeträgerfluid durchflossen wird und einen Tieftemperaturkühler (30) umfasst, bei dem das Tieftemperatur-Wärmeträgerfluid in einer Wärmetauscherbeziehung mit einem Kühlfluid (46) steht; mit ersten Stellantrieben (16, 28), um das Hochtemperatur-Wärmeträgerfluid und das Tieftemperatur-Wärmeträgerfluid im Hochtemperaturkreis (12) bzw. im Tieftemperaturkreis (14) fließen zu lassen; mit mindestens einem zweiten Stellantrieb (48), um die Kühlfluide (46) in den Hochtemperatur- und Tieftemperaturkühlern (22, 30) fließen zu lassen; mit Sensoren (56, 58, 66, 68), um Parameter zu erfassen, die für Kühlbedürfnisse des Hochtemperaturkreises und/oder des Tieftemperaturkreises repräsentativ sind, und um diese Parameter an eine Steuereinheit (60) des Verwaltungssystems zu liefern, wobei die Steuereinheit (60) die ersten und zweiten Stellantriebe in Abhängigkeit von diesen Parametern regelt, Verwaltungssystem, bei dem:
- die ersten Stellantriebe Umwälzpumpen (16, 28) sind, die auf die Hoch- und/oder Tieftemperaturkreise montiert sind,
- die Hochtemperatur- und Tieftemperaturkühler (22, 30) Flüssigkeits-/Gaskühler sind, wobei das Kühlgas dieser Kühler die Umgebungsluft (46) außerhalb des Fahrzeugs ist,
- der oder die Hoch- und Tieftemperatur-Stellantriebe (22, 30) aus Gebläsemotoren (48) bestehen, die eine Kühlluftzirkulation durch diese Kühler erzwingen,
- die Steuereinheit (60) eingerichtet ist, um die Kapazität der Umwälzpumpe (16) des Tieftemperaturkreises vor derjenigen des Gebläsemotors (48) zu nutzen,
- ersten und zweiten Stellantriebe durch eine Änderung ihrer Speisespannung gesteuert werden,
- Steuereinheit (60) einen Rechenalgorithmus für jeden der Stellantriebe (16, 28, 48) verwendet, wobei dieser Algorithmus eine Reihe von Zwischenvariablen (U₁, U₂, U₃, ... ) in Abhängigkeit von den von den Sensoren gelieferten Parametern erzeugt und die höchste Zwischenvariable als Speisespannung dieses Stellantriebs auswählt.

2. System nach Anspruch 1, **dadurch gekennzeichnet, dass** die an die Steuereinheit (60) gelieferten Parameter mindestens einen Parameter bezüglich der ersten Stellantriebe (16, 28) und mindestens einen Parameter bezüglich der zweiten Stellantriebe (48) enthalten.

3. Verwaltungssystem nach Anspruch 1, **dadurch gekennzeichnet, dass** der Hochtemperaturkühler und der Tieftemperaturkühler (22, 30) hintereinander angeordnet sind, um vom gleichen Luftstrom durchquert zu werden, wobei ein einziger Stellantrieb (48) für die zwei Kühler verwendet wird.

4. Verwaltungssystem nach einem der Ansprüche 1 bis 3, **dadurch gekennzeichnet, dass** die für die Kühlbedürfnisse der Hochtemperaturkreise (12) und/oder Tieftemperaturkreise (14) repräsentativen Parameter mindestens die Temperatur (56) des Wärmeträgerfluids des Hochtemperaturkreises am Ausgang des Motors (10), die Temperatur der Ansaugluft des Motors (10), die Temperatur der äußeren Umgebungsluft (58) enthalten.

5. Verwaltungssystem nach einem der Ansprüche 1 bis 4, **dadurch gekennzeichnet, dass** der Tieftemperaturkreis (14) einen Kondensator (32) umfasst, der Teil eines Klimatisierungskreises (34) ist, welcher einen Kompressor (36) verwendet, um ein kryogenes Fluid zu komprimieren, wobei die für die Bedürfnisse der Hochtemperatur- (12) und/oder Tieftemperaturkreise (14) repräsentativen Parameter außerdem den Druck des kryogenen Fluids (68) des Klimatisierungskreises am Ausgang des Kompressors (36) enthalten.

6. Verwaltungssystem nach einem der Ansprüche 1 bis 5, **dadurch gekennzeichnet, dass** die für die Bedürfnisse der Hochtemperatur- (12) und/oder Tieftemperaturkreise (14) repräsentativen Parameter außerdem die Temperatur des Wärmeträgerfluids am Ausgang des Tieftemperaturkühlers und die Geschwindigkeit des Fahrzeugs enthalten.

7. Verwaltungssystem nach einem der Ansprüche 1 bis 6, **dadurch gekennzeichnet, dass** die Zwischenvariablen (U₁, U₂, U₃, ... ) einen Wert Null, einen Mindestwert, annehmen oder einem kontinuierlichen oder diskontinuierlichen Gesetz folgen können.

8. Verwaltungssystem nach einem der Ansprüche 1 bis 7, **dadurch gekennzeichnet, dass** die Zwischenvariablen (U₁, U₂, U₃, ... ) durch einen Vergleich des abgelesenen Werts des Parameters mit einem vordefinierten hohen Schwellwert und niedrigen Schwellwert bestimmt werden.

9. Verwaltungssystem nach einem der Ansprüche 1 bis 8, **dadurch gekennzeichnet, dass** die Rechenalgorithmen so konzipiert sind, dass die Kapazität der Umwälzpumpe (16) des Tieftemperaturkreises vor derjenigen des Gebläsemotors (48) verwendet wird.

10. Verwaltungssystem nach Anspruch 9, **dadurch gekennzeichnet, dass** die hohen Schwellwerte und die niedrigen Schwellwerte des Steueralgorithmus der Niedrigtemperaturpumpe (28) höher als die hohen Schwellwerte bzw. die niedrigen Schwellwerte des Steueralgorithmus des Gebläsemotors (48) gewählt werden, um die Kühlkapazität der Pumpe vor derjenigen des Gebläsemotors (48) zu nutzen.

11. Verwendung des Verwaltungssystems nach einem der vorhergehenden Ansprüche, Verwendung, gemäß der die Steuereinheit (60) die Kapazität der Umwälzpumpe (16) des Niedrigtemperaturkreises vor derjenigen des Gebläsemotors (48) nutzt.

## Claims

1. System for managing the thermal energy developed by a motor vehicle combustion engine (10), comprising a high-temperature circuit (12) through which there passes a high-temperature heat-transfer fluid and which incorporates the engine (10) of the vehicle and a high-temperature cooler (22) in which the high-temperature heat-transfer fluid is in a heat exchange relationship with a coolant fluid (46); a low-temperature circuit (14) through which there passes a low-temperature heat-transfer fluid and which incorporates a low-temperature cooler (30) in which the low-temperature heat-transfer fluid is in a heat exchange relationship with a coolant fluid (46); first actuators (16, 28) for circulating the high-temperature heat-transfer fluid and the low-temperature heat-transfer fluid through the high-temperature circuit (12) and through the low-temperature circuit (14), respectively; at least one second actuator (48) for circulating the coolant fluids (46) through the high-temperature and low-temperature coolers (22, 30); detectors (56, 58, 66, 68) for detecting parameters representative of the cooling requirements of the high-temperature circuit and/or of the low-temperature circuit and for providing these parameters to a control unit (60) of the said management system, the said control unit (60) regulating the first and second actuators according to these parameters, in which management system:
- the said first actuators are circulation pumps (16, 28) mounted on the high-temperature and/or low-temperature circuits,
- the said high-temperature and low-temperature coolers (22, 30) are liquid/gas coolers, the coolant gas of these coolers being the atmospheric air (46) outside the vehicle,
- the said actuator or actuators of the high-temperature and low-temperature coolers (22, 30) consist of engine fans (48) forcing cooling air to circulate through these coolers,
- the control unit (60) is designed to use the capacity of the circulation pump (16) of the low-temperature circuit before that of the engine fan (48),
- the first and second actuators being influenced by varying their supply voltage,
- the control unit (60) using a calculation algorithm for each of the actuators (16, 28, 48), this algorithm creating a series of intermediate variables (U₁, U₂, U₃, etc) as a function of the parameters supplied by the detectors and selecting the highest intermediate variable as the supply voltage for this actuator.

2. System according to Claim 1, **characterized in that** the parameters supplied to the control unit (60) comprise at least one parameter relating to the first actuators (16, 28) and at least one parameter relating to the second actuators (48).

3. Management system according to Claim 1, **characterized in that** the high-temperature cooler and the low-temperature cooler (22, 30) are positioned one behind the other so that one and the same air flow passes through them, a single actuator (48) being used for both coolers.

4. Management system according to one of Claims 1 to 3, **characterized in that** the parameters representative of the cooling requirements of the high-temperature (12) and/or low-temperature (14) circuits comprise at least the temperature (56) of the heat-transfer fluid of the high-temperature circuit at the outlet from the engine (10), the temperature of the inlet air admitted to the engine (10), and the temperature of the external atmospheric air (58).

5. Management system according to one of Claims 1 to 4, **characterized in that** the low-temperature circuit (14) incorporates a condenser (32) that forms part of an air conditioning circuit (34) using a compressor (36) to compress a cryogenic fluid, the parameters representative of the cooling requirements of the high-temperature (12) and/or low-temperature (14) circuits further comprising the pressure of the cryogenic fluid (68) of the air conditioning circuit at the outlet from the compressor (36).

6. Management system according to one of Claims 1 to 5, **characterized in that** the parameters representative of the cooling requirements of the high-temperature (12) and/or low-temperature (14) circuits further comprise the temperature of the heat-transfer fluid at the outlet from the low-temperature cooler and the speed of the vehicle.

7. Management system according to one of Claims 1 to 6, **characterized in that** the intermediate variables (U₁, U₂, U₃, etc) may adopt a zero value, a minimal value, or obey a continuous or discontinuous law.

8. Management system according to one of Claims 1 to 7, **characterized in that** the intermediate variables (U₁, U₂, U₃, etc) are determined by comparing the read value of the parameter against a preset high threshold value and a preset low threshold value.

9. Management system according to one of Claims 1 to 8, **characterized in that** the calculation algorithms are designed to use the capacity of the circulation pump (16) of the low-temperature circuit before that of the engine fan (48).

10. Management system according to Claim 9, **characterized in that** the high threshold values and the low threshold values of the algorithm for controlling the low-temperature pump (28) are chosen to be higher respectively than the high threshold values and low threshold values of the algorithm for controlling the engine fan (48) so as to use the cooling capacity of the pump before that of the engine fan (48).

11. Use of the management system according to any one of the preceding claims, in which use the control unit (60) exploits the capacity of the circulation pump (16) of the low-pressure circuit before that of the engine fan (48).
